Europäisches Patentamt

European Patent Office

Office européen des brevets

(19)

(11) Publication number: **0 146 821**
**B1**

(12) **EUROPEAN PATENT SPECIFICATION**

(45) Date of publication of patent specification: **01.03.89**

(51) Int. Cl.⁴: **B 05 B 13/00, B 65 G 17/14**

(21) Application number: **84114544.4**

(22) Date of filing: **30.11.84**

(54) **Painting plant for painting or similar impregnation of products, particularly wooden products.**

(30) Priority: **01.12.83 IT 8252883**

(43) Date of publication of application:
**03.07.85 Bulletin 85/27**

(45) Publication of the grant of the patent:
**01.03.89 Bulletin 89/09**

(84) Designated Contracting States:
**AT BE CH DE FR GB LI NL SE**

(56) References cited:
**EP-A-0 071 948**
**FR-A-1 550 236**
**FR-A-2 261 146**
**US-A-2 103 901**
**US-A-2 434 125**
**US-A-2 769 728**

(73) Proprietor: **Vidali, Marzio**
**Via Enrico Fermi 33**
**I-31040 Chiarano (Treviso) (IT)**

(72) Inventor: **Vidali, Marzio**
**Via Enrico Fermi 33**
**I-31040 Chiarano (Treviso) (IT)**

Courier Press, Leamington Spa, England.

## Description

The invention relates to a painting plant for painting or impregnating products, such as wooden products, by means of spraying operations.

From the U.S. Patent No. 2103901 it is known a conveying mechanism which is applicable in a painting plant, comprising transport means which are able to support the products to be treated and the already treated products and which in turn are supported by means of conventional sliding chains, driven by driving means and comprising impregnating means constituted by at least a tank containing an impregnating liquid, in which the products to be treated are immersed, and also comprising at least a drying chamber in which the already treated products are dried in a conventional manner.

In turn, such transport means are constituted by a series of tubular rods, onto which the products are hung, which rods are removably supported by a couple of parallel chains and are disposed in a transversal direction of the same chains.

Finally, the conveying mechanism referred to comprises transfer means constituted by a further couple of sliding chains provided with driving means and which is able to draw the rods, together with the products to be treated, from the couple of chains, to shift them towards the tank for immersing the same products in the impregnating liquid contained therein, and then to dispose the already treated products back to the same couple of chains, which provides also for transporting these products towards the drying chamber.

The present invention provides a painting plant of the kind disclosed by the above mentioned U.S. patent, in which however the transfer means are combined with impregnating means shaped and operated in a different way, in such a manner as to obtain a compact plant with small overall dimensions and high productive capacities. This painting plant is realized according to claim 1. The invention will be better understood from the following description, by way of an exemplifying and not limitative scope, with reference to the enclosed drawings in which:

Fig. 1 schematically shows a painting plant according to the prior art,

Fig. 2 schematically shows a constructive detail of the plant of Fig. 3,

Fig. 3 schematically shows the plant according to the invention.

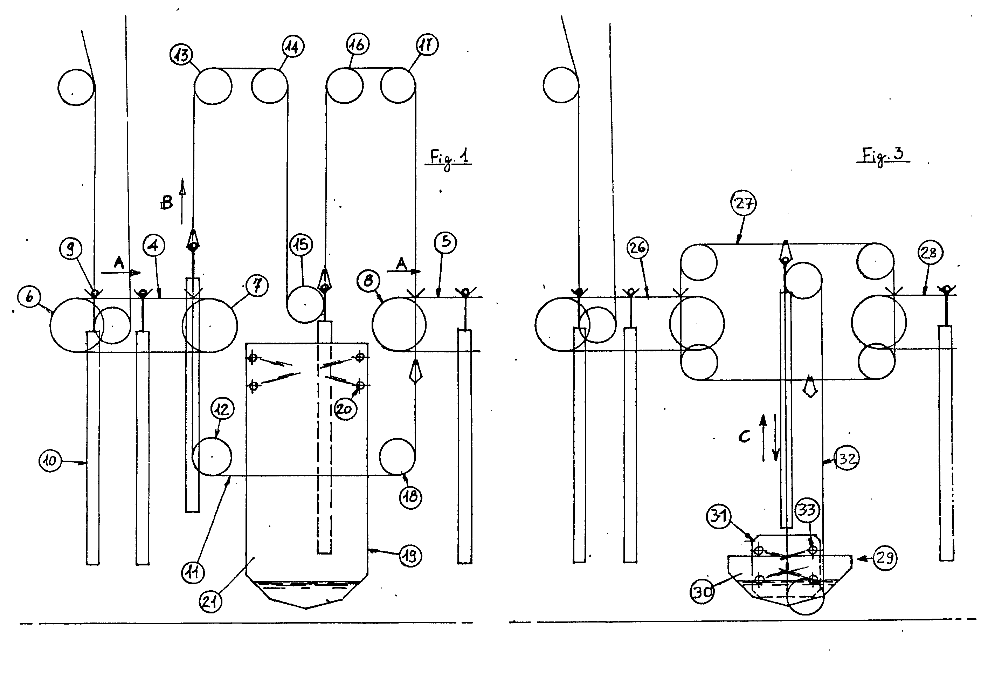

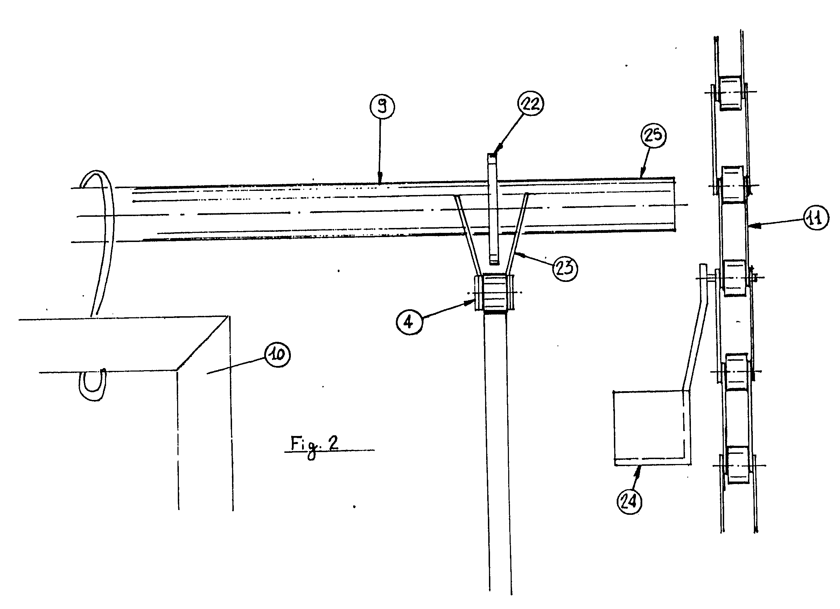

Referring to Fig. 1, the plant is substantially constituted by several couples of conventional sliding chains, which are reciprocally separated.

In the considered case, there are shown two couples 4 and 5 of sliding chains, each of them being constituted by two chains having the same length and disposed parallel each other in a transversal direction thereof. Besides, each couple 4, 5 of chains is wound around two respective couples of wheels 6, 7 and 8 (the last couple of wheels isn't shown) and is driven in the same rotation direction (arrow A) by means of respective motors of the conventional type (which aren't shown), so that the parallel parts of the two chains forming each couple are disposed in a horizontal plane.

Then, tubular rods 9 are provided in the plant referred to and act as transport means able to support a plurality of products 10 to be treated as well as the treated products.

These tubular rods are removably supported on the parallel sliding chains of each couple 4, 5, by arranging them in a transversal direction with respect to the relevant sliding chains, so that the tubular rods 9 are reciprocally spaced at regular intervals along the relevant sliding chains of each couple 4, 5 and are shifted by the same in the advancement direction thereof.

In the described example, the products to be treated may be constituted by wooden products like window and door frames, blinds etc. or also by products constituted by other materials.

In proximity of the wound portion of the chains of the couple 4 there are provided transfer means constituted by an additional couple 11 of sliding chains of conventional type, whose chains are laterally and outwardly shifted from the correspondent chains of the couple 4 and also are disposed in a perpendicular direction to these latter chains.

Likewise to the previous described couples of chains, the couple 11 of chains is constituted by sliding chains of the same length, which are disposed parallel each other in a transversal direction thereof and wound around the respective couples of wheels 12, 13, 14, 15, 16, 17, 18.

Besides, the couple 11 of chains is separated from the couples 4 and 5 of chains and is driven in the direction of the arrow B, independently from the latter, by means of at least a conventional motor (not shown). The scope of the couple 11 of chains is to draw the tubular rods 9, supporting the relevant products 10, to be treated, from the couple 4 of chains and to shift them in correspondence of impregnating means 19. These latter are constituted by a series of fixed spraying nozzles 20, which are connected through adequate pipings to the reservoirs containing the employed impregnating materials (the pipings and reservoirs aren't shown).

The nozzles 20 are arranged in such position as to spray each product from all sides, so as to impregnate it in a satisfactory way, said nozzles being also included within a collecting tank 21, which is adequately dimensioned and is capable to receive the products to be treated.

Therefore, such a tank permits the impregnating materials which have been dispersed during the painting or impregnating treatment of the products to be collected and recovered in a conventional manner.

At the end of this stage, the tubular rods supporting the impregnated products are then transferred, by means of the couple 11 of chains, to the couple 5 of chains which in turn transports them slowly to permit them to be dried in air or within the forced convection ovens, which have been deliberately foreseen (not shown). The figure does not show the remaining portion of the plant, of conventional type, through which the impregnated products may be again shifted, if requested, in correspondence of the couple 4 of chains to carry out further treatments of the same products in the same manner as described, which products finally may be shifted in correspondence of the unload station (not shown), in which such products are drawn and packed. Referring now to Fig. 2, it is shown the manner in which each tubualr rod 9 is tranferred on the couple 4 of chains.

Besides, this figure only shows a portion of the rod 9 and also a relative chain of the couples 4 and 11 only. To this scope, the rod 9 is provided with a collar 22 at each end thereof, which collar is removably inserted into a corresponding fork element 23 provided on the respective chain of the couple 4.

Therefore, each chain has a continuous series of fork elements 23, which are reciprocally spaced to accommodate as many tubular rods 9 and distributed in a continuous manner along the same chain.

Then, several products 10 to be treated, also with different sizes, may be transversely hanged on each rod 9. In addition, this arrangement makes it also possible to vary the number of the tubular rods of the couple 4 of chains, by adding or subtracting some fork elements along the same couple.

In turn, each chain of the couple 11 of chains is provided with a series of entrainment arms 24, which are hinged along the chain at regular intervals and laterally projecting therefrom, in such a manner as to interact with the projecting end portion 25 of each rod 9, when the latter is put on the couple 4 of chains as above described.

The plant so constituted operates in the following way: the products to be impregnated are initially hanged up, by the personnel, on the rods 9 which are supported by the couple 4 of chains as previously described. Then, this couple of chains is slowly moved with a step-to-step advancement movement, until a rod together with the relative products arrives in correspondence of the couple 11 of chains, which initially is still. At this point, the movement of the couple 4 of chains is stopped and the couple 11 of chains is moved in its vertical advancement direction B.

Consequently, every entrainment arm 24 acts against the projecting end portions 25 of each rod and causes the latter to be raised together with the relative products, along the advancement path of the couple 11 of chains.

As soon as the considered rod has been raised as described, the couple 4 of chains is driven again, to predispose the next rod, together with the relative products, to be raised in a similar manner.

In correspondence of the impregnating means 19, every rod together with the products to be treated is lowered by means of the couple 11 of chains into the collecting tank 21 and at the same time the advancement movement of this couple of chains is stopped, until the impregnating operation of all the products is ended; then, the inverse operation is carried out by shifting the rods towards the couple 5 of chains.

As soon as a rod together with the treated products is arrived in correspondence of the couple 5 of chains, this latter is stopped in a position which is suitable for receiving such a rod.

Thereafter, the couple 11 of chains continues to advance, so that the relevant entrainment arms 24 arrange this rod on the respective fork elements 23 of the couple 5 of chains, so disengaging themselves from the same rod.

Afterwards, the couple 5 of chains is actuated again and predisposes itself for receiving the next rod in the same manner as above described.

In this way, the couple 11 of chains provides for shifting the products to be treated towards the impregnating means 19 and for removing from these means the treated products, with a movement which is independent from that one of the couples 4 and 5 of chains.

Consequently, by adequately designing the sliding path of the couple 11 of chains and setting its advancement frequency in a different manner than that one of the couples 4 and 5 of chains, it is possible time to time to obtain different productive capacities so that variable quantities of products may be impregnated. This fact permits to obtain high productive capacities by utilizing a compact plant having small overall dimensions.

Referring to Fig. 3, a painting plant is shown, which comprises three couples 26, 27, 28 of chains, which are separated and independent each other as well as realized and operated in the same manner as above described.

However, in this case the couple 27 of chains has a lesser development in a vertical direction and consequently a sliding path which is shorter than before.

Particularly, this couple of chains is so shaped as that the products to be treated are horizontally shifted in a rectilinear direction, in correspondence of the impregnating means 29, which are formed by a lower fixed collecting tank 30 and a truck 31, which is vertically movable in the direction of the arrows C by means of a further couple 32 of chains and which is provided with a series of spraying nozzles 33.

The tank 30 and the nozzles 33 are formed and operated in the same principle as previously described.

Therefore, at the treatment position in which the products remain suspended above the tank 30 and the truck 31, the couple of chains 27 is stopped and at the same time the truck 31, which initially is disposed on the position shown in the figure, is slowly lifted.

Consequently, the products become completely impregnated; then, the truck 31 is lowered and the couple 27 of chains is driven, so causing the treated products to be removed from the impregnating means 29 and further products to be treated to be predisposed in correspondence of these means.

## Claims

1. Painting plant for painting or impregnating products, such as wooden products, comprising transport means which are able to support a plurality of products to be treated as well as the treated products, which transport means in turn are supported by means of sliding chains provided with driving means, and also comprising impregnating means, said transport means being constituted by a series of tubular rods (9) which are removably supported on at least one couple (4, 26) of parallel sliding chains, said rods being disposed in a transversal direction to the said chains, and comprising transfer means (11, 27) which are able to draw said rods (9) together with the products to be treated from the said couple (4, 26) of chains and to shift them towards the said impregnating means, characterized in that the transfer means achieve such an advancement path as to shift the products (10) in a horizontal rectilinear direction in correspondence of the respective impregnating means and that the impregnating means comprise a truck (31) having spraying nozzles (33) and being vertically operable by means of a further couple of chains (32).

2. Painting plant according to claim 1, characterized in that each of the same tubular rods (9) is provided at every end portion thereof with at least a collar (22), which is able to engage removably corresponding fork elements (23) provided on the said one couple (4, 26) of sliding chains.

3. Painting plant according to claim 1, characterized in that the said transfer means comprise another couple (27) of sliding chains, provided with driving means, which chains are preferably disposed in a perpendicular direction and laterally shifted with respect to the relative chains of the said one couple (26).

4. Painting plant according to claim 3, characterized in that the said another couple (27) of sliding chains may be driven independently and with a different frequency with respect to the said one couple (26) of sliding chains and is also provided with a series of entrainment arms (24), hinged along the respective chains and co-operating with the correspondent projecting end portions (25) of the said rods (9).

## Patentansprüche

1. Anlage zum Anstreichen oder Imprägnieren von Gegenständen wie Gegenständen aus Holz, umfassend Transportmittel die geeignet sind eine Mehrheit von zu behandeln den Gegenständen sowie behandelten Gegenständen zu tragen, welche Transportmittel ihrerseits von mit Antriebsmittel versehenen Laufketten getragen sind, und umfassend also Imprägnierungsmittel, wobei die Transportmittel durch eine Reihe von röhrenförmigen Stäben (9), die von mindestens einem Paar (4, 26) von parallel laufenden Ketten abnehmbar getragen sind, gebildet sind, wobei die Stäbe gegenüber den Ketten in einer Querrichtung angeordnet sind, und umfassend Übertragungsmittel (11, 27) die geeignet sind die Stäbe (9) mit den zu behandelnden Gegenständen vom Kettenpaar (4, 26) abzunehmen und dieselbe nach den Imprägnierungsmitteln zu verschieben, dadurch gekennzeichnet dass die Übertragungsmittel führen eine solche Vorwärtsbewegung aus dass die Gegenstände (10) in einer horizontalen geradlinigen Richtung bei den jeweiligen Imprägnierungsmitteln verschieben werden und dass die Imprägnierungsmittel einen mit Sprühdüsen (33) versehenen Fahrwagen (31) enthalten, der durch ein weitere Kettenpaar (32) in einer senkrechten Richtung antriebbar ist.

2. Anlage nach Anspruch 1, dadurch gekennzeichnet, dass jeder röhrenförmiger Stab (9) bei seinem jeden Endteil mindestens einen Kragen (22) hat, der gegeignet ist mit entsprechenden, im Laufkettenpaar (4, 26) vorgesehenen Gabelelementen (23) losbär gekuppelt zu werden.

3. Anlage nach Anspruch 1, dadurch gekennzeichnet, dass die Übertragungsmittel ein weitere, mit Antriebsmittel versehenen Laufketten-Paar (27) enthalten, welche Laufketten gegenüber den betreffenden Ketten vom Kettenpaar (26) vorzugsweise in einer senkrechten und seitlich versetzten Richtung angeordnet sind.

4. Anlage nach Anspruch 3, dadurch gekennzeichnet, dass das weitere Laufkettenpaar (27) gegenüber dem Laufkettenpaar (26) unabhänigig unt mit einem verschiedenen Takt antriebbar ist und auch mit einer Reihe von Transportarmen (24) versehen ist, die entlang den betreffenden Laufketten angelenkt sind und mit den entsprechenden vorragenden Endteilen (25) der Stäbe (9) zusammenarbeiten.

## Revendications

1. Installation de peinture pour peindre ou imprégner des objects, comme des objects en bois, comprenant des moyens de transport qui sont aptes à supporter une pluralité des objects à traiter ainsi que les objects déjà traités, lesquels moyens de transport à leur tour sont supportés par des chaînes à glissement pourvues des moyens d'actionnement, et comprenant aussi des moyens d'imprégnation, lesdits moyens de transport étant constitués par une série des barres tubulaires (9) qui sont supportées de façon amovible par au moins une couple (4, 26) des chaînes à glissement parallèles, lesdites barres étant disposées dans une direction transverselle par rapport auxdites chaînes, et comprenant des moyens de transfert (11, 27) qui sont aptes à prélever lesdites barres (9) avec les objects à traiter de ladite couple (4, 26) des chaînes et de les déplacer vers lesdits moyens d'imprégnation, caractérisée en ce que les moyens de transfert achèvent un parcours d'advancement tel à déplacer les objects (10) dans une direction rectiligne horizontale en correspondance des respectifs moyens d'imprégnation et en ce que les moyens d'imprégnations comprennent un chariot (31) ayant des buses de pulvérisation (33) et étant actionnable verticalement par une ultérieure couple des chaînes (32).

2. Installation de peinture suivant la revendication 1, caractérisée en ce que chacune desdites barres tubulaires (9) est pourvue à chacune de ses parts d'extrémité d'au moins un collier (22), qui est apte à s'engager de façon amovile avec des correspondants éléments à fourchette (23) qui sont pourvus dans ladite couple (4, 26) des chaînes à glissement.

3. Installation de peinture suivant la revendication 1, caractérisés en ce que lesdits moyens de transfert comprennent une autre couple (27) des chaînes à glissement pourvue des moyens d'actionnement, chaînes qui sont de préférence disposées en direction perpendiculaire et déplacées latéralement par rapport aux relatives chaînes de ladite couple (4, 26).

4. Installation de peinture suivant la revendication 3, caractérisée en ce que ladite autre couple (27) des chaînes à glissement peut être entraînée indépendamment et avec une cadence différente par rapport à ladite couple (26) des chaînes à glisssement et elle est même pourvue d'une série des bras d'entraînement (24), articulés le long des respectives chaînes et coopérant avec les correspondantes parts d'extrémité en saillie (25) desdites barres (9).

Fig. 3

Fig. 1

Fig. 2